# EUROPÄISCHE PATENTSCHRIFT

(11) **EP 3 225 320 B1**
(45) Veröffentlichungstag und Bekanntmachung des Hinweises auf die Patenterteilung: **15.07.2020**
(21) Anmeldenummer: 17000548.2
(22) Anmeldetag: 03.04.2017
(51) Int. Cl.: G01B 11/26, G01B 11/24, G01B 5/00, G01B 11/27, G01L 5/00

(54) **VORRICHTUNG UND VERFAHREN ZUM MESSEN DER GERADHEIT EINES STABFÖRMIGEN WERKSTÜCKS**
DEVICE AND METHOD FOR MEASURING THE STRAIGHTNESS OF A ROD-SHAPED WORKPIECE
DISPOSITIF ET PROCÉDÉ DE MESURE DE LA RECTITUDE D'UNE PIÈCE USINÉE EN FORME DE BARRE

(30) Priorität: 02.04.2016 DE 102016003772
(43) Veröffentlichungstag der Anmeldung: 04.10.2017
(73) Patentinhaber: MSG Maschinenbau GmbH, 57392 Schmallenberg (DE)
(72) Erfinder: KAVOUSIAN, Arshad, 57319 Bad Berleburg (DE)
(74) Vertreter: Verhasselt, Jörn

(56) Entgegenhaltungen:
- EP-A2- 0 414 036
- CN-A- 104 588 447
- DE-A1- 2 207 336
- DE-B3-102014 104 337
- US-A- 4 154 073
- US-A1- 2010 088 043

## Beschreibung

Die Erfindung betrifft eine Vorrichtung zur Messung der Geradheit eines stabförmigen Werkstücks mit einer Auflage für das stabförmige Werkstück sowie ein Verfahren zum Messen der Geradheit eines stabförmigen Werkstücks.

Die Geradheit von stabförmigen Werkstücken ist ein Qualitätsmerkmal, das für Anforderungen an das Werkstück von endscheidender Bedeutung sein kann. Meist wurde in der Vergangenheit die Geradheit eines stabförmigen Werkstücks, insbesondere eines gerichteten Rohres, mittels Augenmaß vermessen, wodurch die Geradheitsmessung dem subjektiven Empfinden der die Messung durchführenden Person überlassen wurde. Ferner sind auch Verfahren bekannt, bei denen die Geradheit eines stabförmigen Werkstücks mittels mechanischen Abtastens oder Anlegen von Schablonen vermessen wird.

Aus DE 10 2011 119 658 B4 ist ein Verfahren und eine Vorrichtung zum Prüfen von Rohren bekannt, bei dem die Rundheit und Geradheit eines Rohres mittels eines berührungslosen optischen Prüfens erfolgt. Die Vorrichtung weist eine Auflagevorrichtung für das zu prüfende Rohr und ein um die Auflagevorrichtung herum angeordnetes Portal auf. Das Portal legt eine quer zur Längsrichtung der Auflagevorrichtung verlaufende Portalebene fest, wobei über den Umfang des Portals mehrere in einer Querebene zur Längsrichtung verteilte, auf das Zentrum des Portals gerichtete optische Rundheitssensoren vorgesehen sind, mit denen Messaufnahmen von Umfangssegmenten des Rohres anfertigbar sind. Ferner weist die Vorrichtung Mittel auf, mit denen das Portal mit allen Sensoren in einer Querrichtung zur Längsrichtung der Auflagevorrichtung so verstellbar und justierbar ist, dass das Zentrum des Portals mit der Rohrachse zusammenfällt, um das Portal auf einen Rohrdurchmesser einzustellen und zu justieren, der zwischen einem kleinst- und einem größtmöglichen Durchmesser liegen darf. Zudem sind Mittel vorgesehen, um das Portal mit allen optischen Sensoren und das auf der Auflagevorrichtung liegende Rohr in Längsrichtung der Auflagevorrichtung relativ zueinander gesteuert zu verfahren.

Die bisher bekannten Vorrichtungen und Verfahren zur Ermittlung der Geradheit von Rohren sind aufwendig und/oder aufgrund vorhandener Wechselwirkungen mit externen Kräften bzw. Spannungen fehlerbehaftet, da die vorhandenen Eigenspannungen bei Auflage des Rohres auf eine Auflagevorrichtung zu einer Verfälschung des Mess-Ergebnisses führen können.

DE 10 2014 104 337 B3 offenbart eine Vorrichtung zum Vermessen eines Werkstücks. Es wird beschrieben, dass das Werkstück zwischen einer ersten Werkstückaufnahme und einer zweiten Werkstückaufnahme eingespannt ist. Es können mehrere Schlitten relativ zum Werkstück bewegt werden, an denen Messspitzen mit Kraftsensoren zum taktilen Abtasten vorgesehen sein können.

US 2010/0088043 A1 offenbart ein automatisiertes System zum Bestimmen von physikalischen Eigenschaften einer Welle. Die Welle wird dabei mittels einer Klemmanordnung eingespannt. Es wird eine Wellenmanipulationsanordnung beschrieben, in der die Welle abrollen kann, um Messdaten eines Kraftaufnehmers zu erzeugen.

EP 0 414 036 A2 offenbart eine Biegerichtmaschine für langgestrecktes Richtgut mit einem Pressenständer mit einem Durchlass, durch den das Richtgut der Länge nach abschnittweise hindurchförderbar ist. Eine Richtstrecke ist durch in Förderrichtung des Richtgutes aufeinanderfolgende Richtwiderlager bestimmt, die zu je vieren in gleicher Höhe des Richtgutes um 90° in dessen Umfangsrichtung versetzt in dem Pressenständer angeordnet sind. Das Richtgut wird mittels der Richtwiderlager eingespannt. Die Richtwiderlager sind Widerlager in Bezug auf die in der Mitte zwischen den Richtwider-Iagern vorgesehenen Richtstempel, die mittels hydraulischer Kolben/Zylindereinheiten betätigbar sind. Die Richtstempel sind in gleicher Anordnung wie die Richtwiderlager ebenfalls zu viert in Umfangsrichtung des Richtgutes um 90° versetzt vorgesehen. Bei einem Hub eines der Richtstempel wird das Richtgut an den beiden gegenüberliegenden Richtwiderlagern abgestützt und biegt sich zwischen diesen durch. Welcher der vier Richtstempel in Tätigkeit gesetzt wird, hängt von der Richtung der vorhandenen Durchbiegung des in der Richtstrecke befindlichen Abschnittes des Richtgutes ab, die durch dicht neben den Richtwiderlagern und den Richtstempeln angeordnete Messeinrichtungen erfasst wird. Die Messeinrichtungen tasten die Lage der äußeren Begrenzung des Richtgutes ab und bestimmen dadurch seine Krümmung zwischen den Richtwiderlagern.

CN 104 588 447 A, US 4 154 073 A und DE 22 07 336 A1 offenbaren jeweils eine Vorrichtung zum Richten eines länglichen Werkstücks.

Aufgabe der vorliegenden Erfindung ist es, eine Vorrichtung und ein Verfahren zu schaffen, mit der bzw. dem zumindest einer der vorgenannten Nachteile überwunden werden kann.

Die Aufgabe wird durch den Gegenstand der unabhängigen Patentansprüche gelöst. Vorteilhafte Ausführungsformen sind Gegenstand der abhängigen Patentansprüche.

Kern der Erfindung ist es, eine Auflage für ein stabförmiges Werkstück zu schaffen, bei der Einflüsse von Eigengewicht des stabförmigen Werkstücks und von außen angreifender Kräfte erfasst werden können. Es wurde erkannt, dass eine Berücksichtigung von von dem stabförmigen Werkstück auf die Auflage ausgeübten Kräften zu einer deutlichen Verbesserung der Messung der Geradheit führt. Eine Verfälschung durch vorhandene von außen am stabförmigen Werkstück angreifende Kräfte kann reduziert werden, weil diese berücksichtigt werden können. Insbesondere mechanische Spannungen des Werkstücks aufgrund der Auflage, die zu einer "Verformung" des stabförmigen Werkstücks führen können, werden berücksichtigt und ihre Auswirkungen auf die Geradheit einbezogen.

Es wird eine Vorrichtung zur Messung der Geradheit eines stabförmigen Werkstücks geschaffen, die eine Auflage für das stabförmige Werkstück aufweist. Die Auflage umfasst mehrere Abschnitte mit jeweils einer Auflagefläche. Es ist mindestens ein Kraftsensor zur Bestimmung einer von dem stabförmigen Werkstück auf die Auflagefläche ausgeübten Kraft in einer Richtung im Wesentlichen quer zur Richtung der Erdbeschleunigung vorgesehen.

Es kann mindestens eine optische Einrichtung zur optischen Erfassung des stabförmigen Werkstücks vorgesehen sein und/oder kann zusätzlich oder alternativ die Lage des stabförmigen Werkstücks im Raum mittels einer mechanischen Abtastung ermittelt werden.

Für jede Auflagefläche kann mindestens ein Kraftsensor vorgesehen sein. Mittels des Kraftsensors wird die von dem stabförmigen Werkstück auf die jeweilige Auflagefläche ausgeübte Kraft gemessen.

Die Richtung im Wesentlichen quer zur Richtung der Erdbeschleunigung kann zusätzlich mit der Längsrichtung des stabförmigen Werkstücks einen Winkel ungleich Null einschließen, also ungleich der Längsrichtung des stabförmigen Werkstücks sein. Sofern auf die Längsrichtung des stabförmigen Werkstücks abgestellt wird, so entspricht die Längsrichtung des stabförmigen Werkstücks im Wesentlichen der Anordnung der Abschnitte der Auflage, welche in einer Reihe angeordnet sein können. Die Abschnitte können insbesondere entsprechend der Längsrichtung des stabförmigen Werkstücks in einer Reihe angeordnet sein. Der Begriff "Längsrichtung des stabförmigen Werkstücks" kann damit im Wesentlichen der "Anordnung der Abschnitte der Auflage in einer Reihe" bzw. "Längserstreckung der Auflage" entsprechen. Der Kraftsensor kann einen Anteil einer Kraft messen, der quer zur Richtung der Erdbeschleunigung ist, wobei zudem dieser Anteil insbesondere ungleich der Längsrichtung des stabförmigen Werkstücks wirken kann.

Die Messung der Kraft an den Abschnitten der Auflage macht es möglich, die Abschnitte in einem Abstand zueinander vorzusehen unabhängig davon, wie lang das Werkstück ist. Die Abschnitte, an denen eine Kraftmessung erfolgt, können auch zur endseitigen Auflage des stabförmigen Werkstücks dienen. Eine erfindungsgemäße Vorrichtung kann flexibel unterschiedliche Längen von stabförmigen Werkstücken vermessen.

Es kann vorgesehen sein, dass mindestens eine der Auflageflächen quer zur Richtung der Erdbeschleunigung bewegbar ist, wobei die Bewegung insbesondere mindestens einen Anteil aufweist, der ungleich der Längsrichtung des stabförmigen Werkstücks ist. Die Bewegbarkeit der mindestens einen Auflagefläche kann durch die Auflage des aufliegenden stabförmigen Werkstücks initiiert werden, wenn dieses beispielsweise eine plastische Verformung aufweist, die in der entsprechenden Richtung quer zur Richtung der Erdbeschleunigung wirkt. Eine zusätzlich zu der Kraftmessung vorgesehene vorgenannte Bewegung kann die auf die Auflagefläche wirkenden Kräfte, die von dem stabförmigen Werkstück ausgeübt werden, verringern.

Erfindungsgemäß wird unter der Messung der Geradheit bzw. dem Messen der Geradheit die Prüfung der Geradheit des stabförmigen Werkstücks verstanden. Insbesondere kann die Messung der Geradheit bzw. das Messen der Geradheit das Ermitteln der Umfangskontur des stabförmigen Werkstücks umfassen, so dass zumindest ein Teilabschnitt des stabförmigen Werkstücks von außen abgebildet werden kann. Insbesondere kann erfindungsgemäß zumindest ein Teilabschnitt der Außenkontur des stabförmigen Werkstücks dreidimensional abgebildet werden. Es kann vorgesehen sein, dass das stabförmige Werkstück in Gänze dreidimensional von außen vermessen und dargestellt werden kann. Eine Protokollierung ist möglich. Die Vorrichtung schafft die Möglichkeit, ein Protokoll für jedes vermessene stabförmige Werkstück zu erstellen. Die Qualität des stabförmigen Werkstücks kann schnell für jedes Werkstück ermittelt werden.

Erfindungsgemäß wird unter dem Begriff "stabförmiges Werkstück" ein Werkstück unterschiedlichster geometrischer Ausprägung verstanden. Ein stabförmiges Werkstück kann insbesondere ein Profil, Vollmaterial, Vierkant-, Mehrkant-, Rund-, Oval-, offene oder geschlossene Profile sowie Kombinationen der genannten Werkstückformen oder insbesondere ein Rohr umfassen.

Erfindungsgemäß werden unter Abschnitten einer Auflage Bereiche verstanden, die für die Ablage eines stabförmigen Werkstücks während der Messung verwendet werden. Die Abschnitte können im Wesentlichen in einer Reihe angeordnet sein. Das stabförmige Werkstück kann auf einer Auflagefläche eines Abschnitts aufliegen. Die Auflagefläche kann im Raum fixiert sein. Die Auflagefläche kann, insbesondere unabhängig von anderen Bereichen der Auflage, beweglich sein und insbesondere kraft-, druck- und/oder weggesteuert, insbesondere in Richtung im Wesentlichen der Erdbeschleunigung, angesteuert werden. Beispielsweise kann ein Abschnitt zur Kompensation des Gewichts angesteuert werden. Die Auflagefläche kann endseitig an einem Stempel oder einer Kolbenstange angeordnet sein, der bzw. die als bewegliches Teil gegenüber einem Zylinder verfahren kann. Die Abschnitte mit den Auflageflächen können insbesondere auch in Richtung im Wesentlichen der Erdbeschleunigung bewegbar sein und dabei kraft-, druck- und/oder weggesteuert angesteuert werden. Bei der Ansteuerung kann es sich um eine Regelung handeln. Mittels der bewegbaren Abschnitte mit den Auflageflächen kann eine Vibration und/oder eine Schwingung des stabförmigen Werkstücks reduziert werden.

Die Abschnitte können fixiert zueinander in Längsrichtung der Aufnahme angeordnet sein. Benachbarte Abschnitte können jeweils den im Wesentlichen gleichen Abstand zueinander aufweisen. Ein Abstand im Bereich von ungefähr 0,5m bis ungefähr 1,7m ist bevorzugt.

Der Begriff "Auflagefläche" umfasst im Wesentlichen jede Form, insbesondere eine im Wesentlichen plane Fläche, auf der das stabförmige Werkstück abschnittsweise aufliegen kann. Andere Formen sind möglich. Es ist beispielsweise eine U- oder V-Form möglich, wobei das stabförmige Werkstück zwischen den Schenkeln des U oder V liegen kann. Die Schenkel können insbesondere einen Winkel von 90° miteinander einschließen; andere Winkel sind möglich. Es können Begrenzungen für die Auflagefläche vorhanden sein, die sich längs der Längsrichtung des stabförmigen Werkstücks erstrecken und einen Abschnitt aufweisen, der zumindest einen Anteil aufweist, der sich in Richtung der Erdbeschleunigung erhebt. Dabei kann dem Rechnung getragen werden, dass "rollende Stäbe" als stabförmige Werkstücke vermessen werden können, die von der Aufnahmefläche ohne ein besonderes Vorsehen der Ausgestaltung der Aufnahmefläche rollen können. Die Auflagefläche kann derartig ausgestaltet sein, dass eine ausreichende Haftreibung zwischen dem stabförmigen Werkstück und der Auflagefläche vorliegt. Hierzu kann die Auflagefläche entsprechend angeraut und/oder mit einem entsprechenden Werkstoff bzw. Material, insbesondere einem Kunststoff, versehen sein. Die Auflagefläche kann eine Flächennormale aufweisen, die im Wesentlichen parallel zur Richtung der Erdbeschleunigung ausgerichtet ist. Die Auflagefläche kann insbesondere kleiner oder gleich groß sein wie der Durchmesser des stabförmigen Werkstücks. Die Größe der Auflagefläche kann so gewählt sein, dass kein Überstand der Auflagefläche über die maximale Breite des stabförmigen Werkstücks vorliegt.

Der Begriff "Erdbeschleunigung" bzw. "Richtung der Erdbeschleunigung" ist die Richtung des Erdschwerefelds und fällt zusammen mit im Wesentlichen der Richtung der Fallbeschleunigung bzw. Lotrichtung. Abweichungen, die beispielsweise durch die Corioliskraft bewirkt werden, sind dabei im Rahmen der Toleranz inbegriffen.

Der Begriff "quer" als Richtungsangabe bzw. geometrische Angabe relativ zu einer weiteren Richtung umfasst den rechten Winkel, aber auch Abweichungen von diesem. Die Angabe "quer" umfasst einen mit der Bezugsrichtung eingeschlossenen Winkel im Bereich von ungefähr 5° bis 175°, bevorzugt zwischen ungefähr 20° und ungefähr 160°, mehr bevorzugt zwischen ungefähr 35° und ungefähr 145°, insbesondere bevorzugt zwischen ungefähr 50° und ungefähr 130°, ganz besonders bevorzugt zwischen ungefähr 65° und ungefähr 115°, ganz besonders insbesondere bevorzugt zwischen ungefähr 70° und ungefähr 110°. Die Bewegung quer zur Richtung der Erdbeschleunigung kann entlang einer ersten Richtung erfolgen, wobei eine weitere, zweite Komponente in einer weiteren Richtung quer zur Richtung der Erdbeschleunigung und quer zur ersten Richtung nicht ausgeschlossen ist. Erfindungsgemäß ist eine Kraft mit einer Komponente messbar, die quer zur Richtung der Erdbeschleunigung ausgerichtet ist und insbesondere ungleich der Längsrichtung des stabförmigen Werkstücks ist. Die Kraftmessung für einen Anteil, der im Wesentlichen horizontal bzw. waagerecht wirkt ist möglich, wobei dieser Anteil nicht (nur) in Richtung der Längsrichtung des stabförmigen Werkstücks wirkt.

In einer besonders bevorzugten Ausführungsform ist der mindestens eine Kraftsensor zur Bestimmung einer von dem stabförmigen Werkstück auf die Auflagefläche ausgeübten Kraft auch für die Bestimmung einer im Wesentlichen in Richtung der Erdbeschleunigung wirkenden Kraft ausgestaltet. Hierdurch kann das Ergebnis der Messung verbessert werden und die Vorrichtung einfach ausgestaltet sein. Es kann auch vorgesehen sein, dass ein weiterer Kraftsensor vorhanden ist, mit dem eine von dem stabförmigen Werkstück auf die Auflagefläche ausgeübte Kraft in einer Richtung im Wesentlichen in Richtung der Erdbeschleunigung bestimmbar ist. Es ist auch möglich, dass zwei Kraftsensoren vorhanden sind, die beide jeweils Anteile der Kraft in den genannten Richtungen messen und mittels der bekannten Anordnung, wie die Kraftsensoren zur Auflagefläche angeordnet sind, die Kräfte, insbesondere mathematisch unter Einbeziehung der Winkel, unter denen die Kraftsensoren messen bzw. diese angeordnet sind, ermittelt werden.

In der Beschreibung umfasst die Bestimmung oder Ermittlung einer Kraft mittels eines Kraftsensors in einer angegebenen Richtung auch die Möglichkeit, dass der Kraftsensor auch eine Kraft in einer anderen Richtung erkennt bzw. das von dem Kraftsensor erhaltene Signal kann einen entsprechenden (weiteren) Anteil aufweisen. Die Bestimmung oder Ermittlung kann mittels mehrerer Kraftsensoren bzw. entsprechender Signale erfolgen, um die Kraft in einer angegebenen Richtung zu ermitteln.

In einer bevorzugten Ausführungsform kann die Auflagefläche neigbar gelagert sein. Die Auflagefläche kann insbesondere derart gelagert sein, dass eine kardanische Lagerung bzw. eine gelenkige Lagerung vorliegt. Die Auflagefläche kann als Endbereich einer pendelnden Stütze, die endseitig gelenkig gelagert sein kann, ausgestaltet sein. Die Auflagefläche ist nach oben zur Auflage des stabförmigen Werkstücks ausgerichtet und weist in Richtung der Erdbeschleunigung bzw. unter einem Winkel zur Erdbeschleunigung eine gelenkige Lagerung auf. Die Auflagefläche kann zusätzlich oder alternativ verschieblich gelagert sein. Die verschiebliche Lagerung kann insbesondere in zwei zueinander orthogonalen Richtungen verschieblich sein. Die beiden Richtungen können auch einen Winkel ungleich 90° zueinander einschließen. Die Verschieblichkeit der Auflagefläche kann entlang einer Ebene erfolgen. Die Verschieblichkeit der Auflagefläche kann auch derart erfolgen, dass die Auflagefläche entlang eines Kugelsegments erfolgt. Bei der Bewegung und Lagerung der Auflagefläche kann eine Reduzierung von Reibungskräften bevorzugt sein, bei der beispielsweise eine Linearführung, insbesondere mit einer Druckluftauflage vorgesehen ist. Es kann auch zusätzlich oder alternativ vorgesehen sein, dass bei der Linearführung ein magnetisches Feld verwendet wird. Zusätzlich oder alternativ kann ein Rollenlager zur Reduzierung der Reibungskraft verwendet werden.

In einer besonders bevorzugten Ausführungsform ist die Vorrichtung derart ausgestaltet, dass (a) die Bewegung der und/oder die Kraft auf die Auflagefläche im Wesentlichen quer zur Richtung der Erdbeschleunigung und/oder (b) die Bewegung der und/oder die Kraft auf die Auflagefläche in Richtung im Wesentlichen der Erdbeschleunigung und/oder der Richtung in der die Auflagefläche bewegt werden kann, erfasst wird. Die Bewegung kann mittels einer optischen Einrichtung erfasst werden. Die Einwirkung der Kraft kann beispielsweise mittels eines oder mehrerer Kraftsensoren am Abschnitt mit der Auflagefläche erfolgen. Es kann eine Wägezelle als Sonderform eines Kraftsensors bzw. Kraftaufnehmers verwendet werden. Dadurch, dass die Bewegung der Auflagefläche erfasst werden kann, kann eine Deformation, die beispielsweise von der Geometrie des stabförmigen Werkstücks und/oder dem Material verursacht sein kann, insbesondere mathematisch, ermittelt werden, um beispielsweise Einflüsse von extern wirkenden Kräften und der Gravitation zu kompensieren. Es besteht auch die Möglichkeit einer Kennlinienaufnahme zur Bestimmung von Materialeigenschaften, wie beispielsweise des E-Moduls.

Erfindungsgemäß ist die Vorrichtung derart ausgestaltet, dass (a) die Kraft auf die Auflagefläche im Wesentlichen quer zur Richtung der Erdbeschleunigung sowie insbesondere ungleich zur Längsrichtung des stabförmigen Werkstücks erfasst wird und (b) die Kraft auf die Auflagefläche in Richtung im Wesentlichen der Erdbeschleunigung erfasst werden kann. Die Einwirkung der Kraft kann beispielsweise mittels eines oder mehrerer Kraftsensoren am Abschnitt mit der Auflagefläche erfolgen. Es kann eine Wägezelle als Sonderform eines Kraftsensors bzw. Kraftaufnehmers verwendet werden. Dadurch, dass die von dem stabförmigen Werkstück auf die Auflagefläche wirkende Kraft erfasst werden kann, kann eine Deformation, die beispielsweise von der Geometrie des stabförmigen Werkstücks und/oder dem Material verursacht sein kann, insbesondere mathematisch, ermittelt werden, um Einflüsse von extern wirkenden Kräften und der Gravitation zu kompensieren bzw. zu berücksichtigen.

Erfindungsgemäß umfasst der Begriff "Kraftsensor" einen Sensor, der ein Einwirken einer Kraft auf die Auflagefläche erfassen kann, insbesondere das Einwirken einer Kraft auf die Auflagefläche in einer Richtung im Wesentlichen der Richtung der Erdbeschleunigung und/oder der Richtung in der die Auflagefläche bewegt werden kann, um beispielsweise die Gewichtskraft des stabförmigen Werkstücks zu kompensieren. Der Kraftsensor kann insbesondere einen Anteil einer Kraft bestimmen, der von dem stabförmigen Werkstück auf die Auflagefläche wirkt. Der Anteil kann quer zur Richtung der Erdbeschleunigung und insbesondere ungleich zur Längsrichtung des stabförmigen Werkstücks wirken. Der Kraftsensor kann mittels unterschiedlicher Sensoren ausgestaltet sein. Der Kraftsensor kann aus der Gruppe von Dehnungsmessstreifen; Federkörper-Kraftaufnehmern, insbesondere S-förmigen Federkörpern, bei denen eine Biegemessung am Mittelsteg durchgeführt werden kann; Piezo-Kraftaufnehmern; Elektromagnetischen Kraftaufnehmern und/oder resistiven Kraftaufnehmern ausgewählt werden.

Mittels eines oder mehrerer Kraftsensoren, die insbesondere in jedem Abschnitt der Auflage vorgesehen sind, ist es möglich, auch Reibungskräfte bei der Bewegung der Auflagefläche zu erfassen. Eine auf die Auflagefläche wirkende Kraft ist ermittelbar. Wenn eine Auflagefläche gegen das stabförmige Werkstück mit einem voreingestellten Druck ausfährt, so sollte die auf einen Kraftsensor wirkende Kraft mathematisch einfach berechenbar sein, wenn sich das System ideal verhält. Da aber Reibung beispielsweise zwischen einer Kolbenstange und einem Zylinder auftreten kann (insbesondere der sogenannte "stick-slip-effekt" als Haftgleiteffekt), kann es passieren, dass sich bei einem voreingestellten Druck das System nicht ideal verhält, d.h. beispielsweise die Kolbenstange in dem Zylinder zumindest teilweise haftet. Durch die Messung der Kraftsensoren, kann der Effekt der Reibung erkannt und mathematisch berücksichtigt werden, indem die ideale (Soll-)Kraft mit der mit dem Kraftsensor gemessenen Kraft verglichen wird. Durch die Berücksichtigung der am Kraftsensor ermittelten Kraft ist es möglich, die Auflagen anzusteuern, ohne diese regeln zu müssen. Insbesondere können alle Abschnitte der Auflage mit der gleichen Kraft bzw. dem gleichen Druck angesteuert werden, der unter Berücksichtigung der Masse bzw. Dichte des stabförmigen Werkstücks und dem E-Modul des Materials des Werkstücks ergeben kann.

Es ist auch möglich, dass die Auflagefläche derart in Richtung des stabförmigen Werkstücks ausfährt (im Wesentlichen in Richtung der Erdbeschleunigung), dass eine Gegenkraft messbar ist.

In einer bevorzugten Ausführungsform ist der mindestens eine der Abschnitte mit einem vorbestimmten Druck im Wesentlichen in Richtung entgegen der Erdbeschleunigung ausfahrbar. Hierdurch kann das Eigengewicht des stabförmigen Werkstücks, welches auf den Abschnitt wirkt, kompensiert werden.

Alternativ oder zusätzlich ist es möglich, dass mindestens einer der Abschnitte einen Weg, der einstellbar ist bzw. voreingestellt sein kann, im Wesentlichen entgegen der Richtung der Erdbeschleunigung ausfahren kann. Hierdurch kann dem Eigengewicht des auf dem Abschnitt aufliegenden stabförmigen Werkstücks entgegengewirkt werden bzw. Einflüsse hierdurch vermieden werden.

In einer besonders bevorzugten Ausführungsform ist jeder der Abschnitte, auf dem das stabförmige Werkstück zumindest teilweise aufliegt, mit im Wesentlichen gleichem voreingestellten Druck und/oder im Wesentlichen gleichem Weg im Wesentlichen in Richtung entgegen der Erdbeschleunigung ausfahrbar. Hierdurch kann über die gesamte Länge des stabförmigen Werkstücks, welches auf der Auflage aufliegt, das Eigengewicht kompensiert werden.

In einer besonders bevorzugten Ausführungsform sind die Auflagen nicht verfahrbar und es werden die zwischen dem auf die Auflagefläche aufgelegten stabförmigen Werkstück und der Auflagefläche wirkenden Kräfte erfasst, wobei mindestens zwei Anteile erfasst werden können. Ein Anteil in Richtung der Erdbeschleunigung und ein Anteil in Richtung quer zur Erdbeschleunigung, der insbesondere zusätzlich ungleich der Längsrichtung des stabförmigen Werkstücks sein kann.

In einer besonders bevorzugten Ausführungsform sind zwei endseitige Abschnitte der Auflage vorgesehen, die eine Fixierung des stabförmigen Werkstücks erlauben. Erfindungsgemäß wird dabei unter einer Fixierung verstanden, dass das stabförmige Werkstück unbeweglich quer zur Richtung im Wesentlichen der Erdbeschleunigung ist. Dies kann beispielsweise durch eine entsprechend geformte Auflagefläche erreicht werden. Die Auflagefläche der endseitigen Abschnitte kann dazu insbesondere eine U- oder V-förmige Form umfassen, was ermöglicht, dass quer zur Richtung im Wesentlichen der Erdbeschleunigung und quer zur Längsrichtung des stabförmigen Werkstücks Anlageflächen ausgebildet sind, die entgegengesetzt zueinander gerichtet sind und mit denen das stabförmige Werkstück in Kontakt ist. Der Begriff "entgegengesetzt gerichtet" umfasst erfindungsgemäß Flächen oder Teilabschnitte von Flächen, deren Flächennormale parallel verlaufen oder einen Winkel von ≤ 90° zueinander einschließen. An den endseitigen Abschnitten der Auflage können ebenfalls die Kräfte ermittelt werden, die zwischen dem stabförmigen Werkstück und der Auflagefläche wirken, wobei zwei Anteile erfasst werden können: ein Anteil in Richtung der Erdbeschleunigung und ein Anteil in einer Richtung quer zur Erdbeschleunigung, der zudem auch ungleich zur Längsrichtung des stabförmigen Werkstücks sein kann.

In einer besonders bevorzugten Ausführungsform sind die endseitigen Abschnitte der Auflage so wie die anderen Abschnitte in einer Richtung im Wesentlichen der Erdbeschleunigung ansteuerbar bzw. bewegbar, insbesondere mittels einer Kolbenstange-Zylinder-Einheit. Besonders bevorzugt weisen die endseitigen Abschnitte keine besondere Beweglichkeit in Richtung quer zur Richtung der Erdbeschleunigung auf. Die endseitigen Abschnitte können mit einem oben beschriebenen Kraftsensor versehen sein, mit dem eine auf die Auflagefläche wirkende Kraft ermittelt werden kann. Die endseitigen Abschnitte können auch fixiert im Raum sein.

Sofern in der Beschreibung und/oder den Ansprüchen eine Zahlenangabe verwendet wird, so umfasst diese Zahlenangabe nicht nur den reinen Wert, sondern auch eine Bereichsangabe eines Intervalls mit Randwerten, die sich aus dem reinen Wert +/-10% oder +/-10° ergeben.

Eine optische Einrichtung zur optischen Erfassung des stabförmigen Werkstücks kann eine Kamera umfassen. Ferner kann die optische Einrichtung eine Beleuchtung umfassen, die mittels mindestens eines oder mehrerer Leuchtmittel, die insbesondere als LEDs ausgestaltet sein können, die Auflage beleuchten kann. Es ist beispielsweise möglich, dass die Kamera und das Leuchtmittel oder die mehreren Leuchtmittel in einer Einheit vorliegen, die zum stabförmigen Werkstück bzw. der Auflage ausgerichtet sind. Die optische Einrichtung kann an einer die optische Einrichtung haltenden Halterung der Vorrichtung befestigt werden. Die Ansteuerung des Leuchtmittels kann kontinuierlich oder diskontinuierlich, beispielsweise mittels eines kurzzeitigen Ansteuerns des Leuchtmittels, realisiert sein. Die Vorrichtung kann eine Fixierung für die optische Einrichtung und/oder das Leuchtmittel aufweisen. Die Fixierung kann sicherstellen, dass die optische Einrichtung und/oder das Leuchtmittel nach einer erfolgten Kalibrierung in dem bei der Kalibrierung verwendeten Abstand und Ausrichtung zur Auflage des stabförmigen Werkstücks verbleiben.

In einer bevorzugten Ausführungsform ist im Bereich der Auflage, insbesondere unter der Auflage, ein Reflektor vorgesehen, mit dem das optische Erfassen des stabförmigen Werkstücks mittels einer optischen Einrichtung verbessert werden kann. Insbesondere kann der Reflektor als eine reflektierende Oberfläche ausgestaltet sein, die auf die Oberfläche einfallendes Licht auf sich selbst zurück reflektiert. Die reflektierende Oberfläche kann mit katadioptrisch wirkenden Glaskugeln versehen sein. In einer besonders bevorzugten Ausführungsform können mehrere Reflektoren vorhanden sein.

Es kann auch vorgesehen sein, dass die optische Einrichtung ein Gegenlicht erfasst.

Die Erfindung schafft auch ein Verfahren zum Messen der Geradheit eines stabförmigen Werkstücks, wobei das Werkstück auf eine eine Auflagefläche aufweisende Auflage aufgelegt wird. Erfindungsgemäß wird die von dem stabförmigen Werkstück auf die Auflagefläche ausgeübte Kraft in einer Richtung im Wesentlichen quer zur Richtung der Erdbeschleunigung gemessen.

Die Erfindung wird nachfolgend anhand von in den Zeichnungen dargestellten Ausführungsbeispielen näher erläutert.

In den Zeichnungen zeigt:
- Fig. 1: eine Vorrichtung zur Messung der Geradheit eines stabförmigen Werkstücks in einer isometrischen Darstellung;
- Fig. 2: eine Detailansicht eines Abschnitts mit einer Auflagefläche gemäß einer Ausführungsform in teilweise geschnittener Darstellung; und
- Fig. 3: eine Detailansicht eines Abschnitts mit einer Auflagefläche gemäß einer weiteren Ausführungsform in teilweise geschnittener Darstellung.

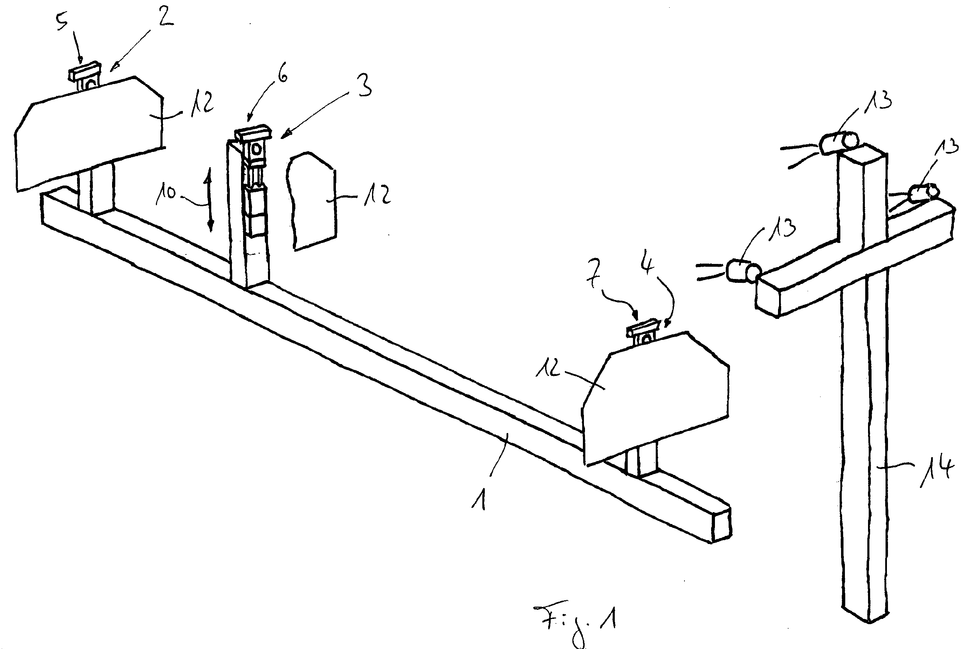

Fig. 1 zeigt in isometrischer Darstellung eine erfindungsgemäße Vorrichtung schräg von der Seite. Es ist eine Auflage für ein stabförmiges Werkstück, welches nicht gezeigt ist, vorhanden. Das stabförmige Werkstück kann in Längserstreckung eines Balkens 1, an dem Abschnitte 2, 3, 4 befestigt sind, ausgerichtet aufgelegt werden. Das stabförmige Werkstück kann entlang der Richtung der Abschnitte 2, 3, 4 ausgerichtet sein. Die Abschnitte 2, 3, 4 der Auflage weisen Auflageflächen 5, 6, 7 auf, die mit dem stabförmigen Werkstück in Kontakt gelangen können. Die Abschnitte 2 und 4 sind derart angeordnet und mit einem derartigen Abstand zueinander vorgesehen, dass jeweils ein Endbereich des stabförmigen Werkstücks auf dem Abschnitt 2 bzw. 4 aufliegt. Das zu messende Werkstück kann aber auch kürzer ausgebildet sein, so dass das Werkstück nur auf den Abschnitten 2 und 3 bzw. 3 und 4 aufliegen kann.

Die Auflageflächen 5, 6, 7 der Abschnitte 2, 3, 4 sind im Wesentlichen plan ausgestaltet, können jedoch auch V-förmig ausgestaltet sein. Die Abschnitte 2, 3, 4 können in der Höhe druck- bzw. weg- und/oder kraftgeregelt verfahren werden. Die Auflageflächen 5, 6, 7 der Abschnitte 2, 3, 4 sind damit in einer Richtung im Wesentlichen parallel zur Richtung der Erdbeschleunigung verfahrbar. Die Regelung der Bewegung in Richtung im Wesentlichen parallel zur Richtung der Erdbeschleunigung kann in Abhängigkeit des Eigengewichts des stabförmigen Werkstücks erfolgen. Insbesondere kann hier aufgrund einer Massenverteilung des stabförmigen Werkstücks, d.h. einer Kenntnis der Dichte des stabförmigen Werkstücks und der Größe der Auflageflächen 5, 6, 7 ein Druck eingestellt werden, mit dem die Abschnitte 2, 3, 4 in einer Richtung im Wesentlichen parallel zur Richtung der Erdbeschleunigung ausgefahren werden können.

Die Auflageflächen 5, 6, 7 der Abschnitte 2, 3. 4 können neben der möglichen Bewegung in einer Richtung im Wesentlichen parallel zur Richtung der Erdbeschleunigung auch in einer Komponente quer zur Richtung der Erdbeschleunigung beweglich sein.

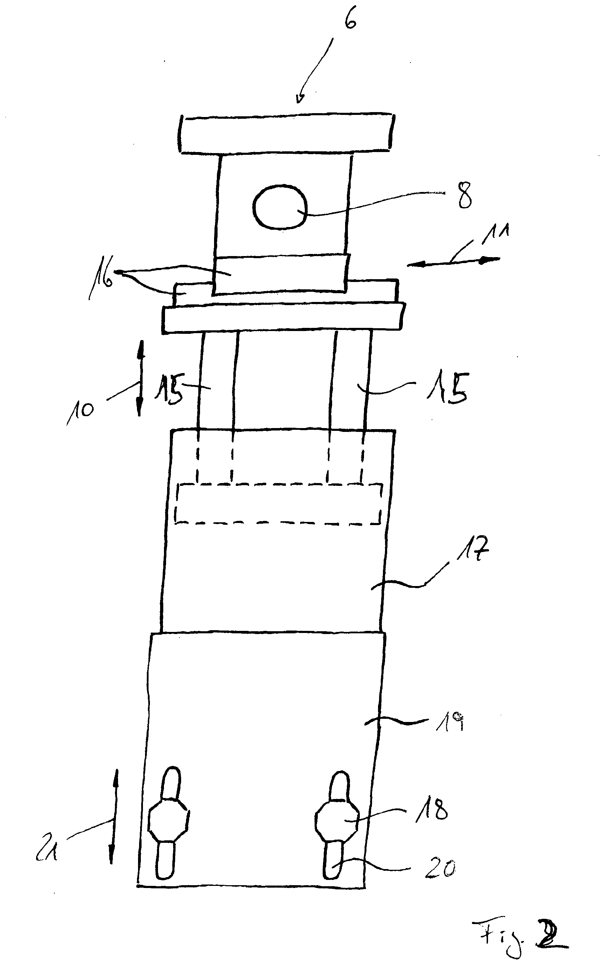

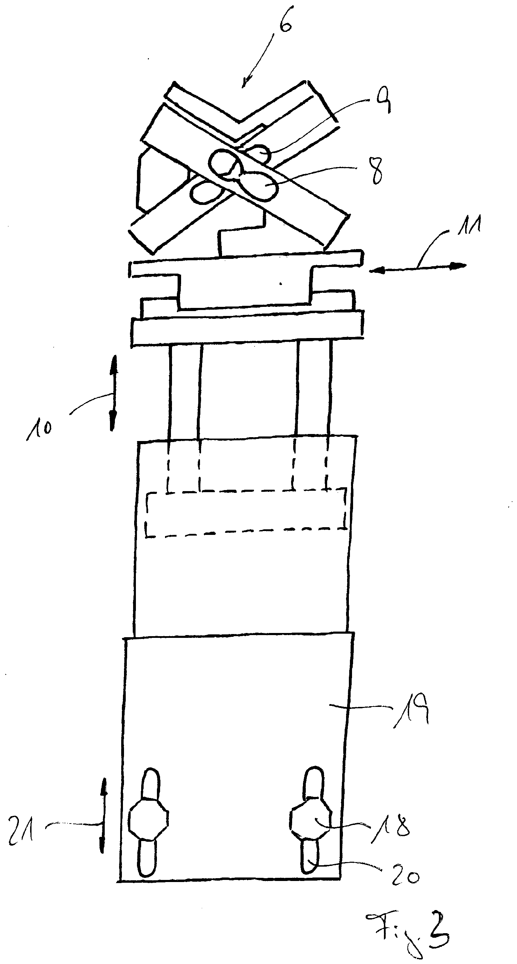

An den Auflagen 2, 3, 4 ist mindestens ein Kraftsensor 8, 9 angeordnet (Fig. 2 und 3), mit dem jeweils eine von dem stabförmigen Werkstück auf die Auflagefläche 5, 6, 7 ausgeübte Kraft in einer Richtung im Wesentlichen quer zur Richtung der Erdbeschleunigung bestimmt werden kann. Der mindestens eine Kraftsensor 8, 9 kann insbesondere zur Bestimmung einer von dem stabförmigen Werkstück auf die Auflagefläche 5, 6, 7 ausgeübten Kraft in einer Richtung im Wesentlichen quer zur Richtung der Erdbeschleunigung und ungleich der Längsrichtung des stabförmigen Werkstücks vorgesehen sein.

Zudem kann mit dem Kraftsensor 8, 9 auch eine von dem stabförmigen Werkstück auf die Auflagefläche 5, 6, 7 ausgeübte Kraft in einer Richtung der Erdbeschleunigung gemessen werden. Die Richtung der Erdbeschleunigung ist im Wesentlichen in Richtung durch den senkrechten Doppelpfeil 10 in der Fig. 1 angezeigt. Die Beweglichkeit quer zur Richtung der Erdbeschleunigung ist als Doppelpfeil 11 (Fig. 2 und 3) angezeigt.

Unterhalb der Auflage für das stabförmige Werkstück sind Reflektoren 12 angeordnet, die Licht, welches insbesondere von einer optischen Einrichtung 13 ausgestrahlt wird, zu der optischen Einrichtung 13 zurückreflektiert. Es sind mehrere optische Einrichtungen 13 vorhanden, die mindestens ein Leuchtmittel und eine Kamera aufweisen. Durch die Beleuchtung und Erfassung mit unterschiedlichen Winkeln kann aus den Einzelbildern der Kameras der optischen Einrichtung 13 ein dreidimensionales Bild des stabförmigen Werkstücks bestimmt werden. Die optischen Einrichtungen 13 sind an einem Gerüst 14, welches Halterungen für die optischen Einrichtungen 13 aufweist, fixiert.

Die Fig. 2 zeigt in einer teilweise geschnittenen Darstellung beispielhaft für einen der Abschnitte 2, 3, 4 den Abschnitt 3 der Auflage. Die Auflagefläche 6 ist mit dem Kraftsensor 8 derart gekoppelt, dass eine von dem Werkstück auf die Auflagefläche 6 wirkende Kraft messbar ist. Mit dem Kraftsensor 8 sind Komponenten der Kraft messbar, die (a) in Richtung der Erdbeschleunigung wirken und (b) in einer Richtung quer zur Richtung der Erdbeschleunigung. Die Komponente in Richtung quer zur Richtung der Erdbeschleunigung kann zudem insbesondere ungleich der Längsrichtung des Werkstücks sein.

Die Auflagefläche 6 ist zudem an einer Kolbenstange 15 angeordnet bzw. an dieser befestigt, wobei zwischen der Kolbenstange 15 und der Auflagefläche 6 eine seitliche Beweglichkeit mittels einer Schienenführung 16 möglich ist.

Die Kolbenstange 15 ist in einem Zylinder 17 verschieblich. Zur Beaufschlagung des Zylinders 17 mit Druckluft weist der Zylinder 17 einen Zylindereinlass mit einem Druckregelventil und einen Zylinderauslass auf, wobei der Zylinderauslass auch eine Drossel aufweist.

Der Zylinder 17 mit der Kolbenstange 15 ist an einem Führungsstück 19 befestigt. Das Führungsstück 19 weist Führungslängsschlitze 20 in Form von Durchbrüchen auf, durch die sich Befestigungsschrauben 18 erstrecken können, mittels derer eine Befestigung mit einer voreinstellbaren Höhe möglich ist, was durch den Doppelpfeil 21 angegeben ist.

Die Fig. 3 zeigt eine alternative Ausführungsform mit einer V-förmigen Auflagefläche 6. Es sind zwei Kraftsensoren 8, 9 vorgesehen, mit denen eine von dem Werkstück auf die Auflagefläche 6 wirkende Kraft messbar ist. Mit den Kraftsensoren 8, 9 sind Komponenten der Kraft messbar, die (a) in Richtung der Erdbeschleunigung wirken und (b) in einer Richtung quer zur Richtung der Erdbeschleunigung. Die Komponente in Richtung quer zur Richtung der Erdbeschleunigung kann zudem insbesondere ungleich der Längsrichtung des Werkstücks ausgerichtet sein. Die in den Fig. 2 und 3 gezeigten Ausführungsformen für die Ausgestaltung der Auflagefläche 6 sind frei kombinierbar. Vorurteile und entgegenstehende Auffassungen existieren nicht. Insbesondere können Kraftsensoren 8, 9 in jeglicher Anordnung und Ausgestaltung verwendet werden, mit denen Kräfte messbar sind, die Komponenten aufweisen, die (a) in Richtung der Erdbeschleunigung und (b) in einer Richtung quer zur Richtung der Erdbeschleunigung wirken. Die Komponente in Richtung quer zur Richtung der Erdbeschleunigung kann zudem insbesondere ungleich der Längsrichtung des Werkstücks ausgerichtet sein. Eine Erfassung der Kräfte sowohl in Richtung der Erdbeschleunigung als auch in Richtung quer zur Erdbeschleunigung kann berücksichtigt werden und bei der Messung der Geradheit ein verbessertes Ergebnis liefern.

Ein erfindungsgemäßes Verfahren kann insbesondere mit der in der Fig. 1 gezeigten Vorrichtung und den in den Fig. 2 und/oder 3 dargestellten Abschnitten der Auflage mit den entsprechenden Auflageflächen erfolgen. Das stabförmige Werkstück kann zunächst auf einer zusätzlichen Auflage aufgelegt werden. Die zusätzliche Auflage kann insbesondere auch Abschnitte aufweisen, die eine jeweilige Auflagefläche umfassen. Die zusätzliche Auflage kann dazu dienen, insbesondere die Auflageflächen, die frei in der Richtung im Wesentlichen quer zur Erdbeschleunigung beweglich sind, zu schützen bzw. die Belastung zu reduzieren.

Die Abschnitte der zusätzlichen Auflage können insbesondere in der gleichen Richtung wie die Auflage, die die vorgenannten Abschnitte, die eine frei bewegliche Auflagefläche aufweisen, umfassen, ausgerichtet sein. Die Abschnitte der zusätzlichen Auflage können eingefahren werden und die Abschnitte der frei beweglichen Auflage in Richtung des stabförmigen Werkstücks bewegt werden, so dass die Abschnitte der zusätzlichen Auflage außer Kontakt mit dem stabförmigen Werkstücks und die Abschnitte der Auflage, die frei beweglich sind, in Kontakt mit dem stabförmigen Werkstücks gelangen können.

## Patentansprüche

1. Vorrichtung zur Messung der Geradheit eines stabförmigen Werkstücks mit einer Auflage für das stabförmige Werkstück und einer Einrichtung zur optischen Erfassung und/oder mechanischen Abtastung des stabförmigen Werkstücks, **dadurch gekennzeichnet, dass** die Auflage mehrere Abschnitte (2, 3, 4) mit jeweils einer Auflagefläche (5, 6, 7) aufweist, wobei mindestens ein mit einer Auflagefläche (5, 6, 7) gekoppelter Kraftsensor (8, 9) zur Bestimmung einer von dem stabförmigen Werkstück auf die Auflagefläche (5, 6, 7) ausgeübten Kraft in einer Richtung im Wesentlichen quer zur Richtung der Erdbeschleunigung vorgesehen ist.

2. Vorrichtung nach Anspruch 1, **dadurch gekennzeichnet, dass** der mindestens eine Kraftsensor (8, 9) zur Bestimmung einer von dem stabförmigen Werkstück auf die Auflagefläche (5, 6, 7) ausgeübten Kraft in einer Richtung im Wesentlichen quer zur Richtung der Erdbeschleunigung und ungleich der Längsrichtung des stabförmigen Werkstücks vorgesehen ist.

3. Vorrichtung nach Anspruch 1 oder 2, **dadurch gekennzeichnet, dass** der mindestens eine Kraftsensor (8, 9) zudem zur Bestimmung einer von dem stabförmigen Werkstück auf die Auflagefläche (5, 6, 7) ausgeübten Kraft in einer Richtung im Wesentlichen in Richtung der Erdbeschleunigung ausgestaltet ist und/oder ein weiterer Kraftsensor (8, 9) vorhanden ist, mit dem eine von dem stabförmigen Werkstück auf die Auflagefläche (5, 6, 7) ausgeübte Kraft in einer Richtung im Wesentlichen in Richtung der Erdbeschleunigung bestimmbar ist.

4. Vorrichtung nach einem der Ansprüche 1 bis 3, **dadurch gekennzeichnet, dass** mindestens eine Auflagefläche (5, 6, 7) quer zur Richtung der Erdbeschleunigung, insbesondere mit einer Komponente ungleich der Längsrichtung des stabförmigen Werkstücks, bewegbar ist.

5. Vorrichtung nach einem der Anspruch 1 bis 4, **dadurch gekennzeichnet, dass** die Auflagefläche (5, 6, 7) neigbar und/oder verschieblich gelagert ist.

6. Vorrichtung nach einem der Ansprüche 1 bis 5, **dadurch gekennzeichnet, dass** die Bewegung der Auflagefläche (5, 6, 7) quer zur Richtung der Erdbeschleunigung erfasst wird.

7. Vorrichtung nach einem der Ansprüche 1 bis 6, **dadurch gekennzeichnet, dass** mindestens einer der Abschnitte (2, 3, 4) mit einem vorbestimmten Druck im Wesentlichen in Richtung entgegen der Erdbeschleunigung ausfahrbar ist.

8. Vorrichtung nach einem der Ansprüche 1 bis 7, **dadurch gekennzeichnet, dass** zwei endseitige Abschnitte (2, 3, 4) vorgesehen sind, die eine Fixierung des stabförmigen Werkstücks erlauben.

9. Vorrichtung nach einem der Ansprüche 1 bis 8, **dadurch gekennzeichnet, dass** mindestens eine optische Einrichtung (13) zur optischen Erfassung des stabförmigen Werkstücks vorgesehen ist.

10. Vorrichtung nach einem der Ansprüche 1 bis 9, **dadurch gekennzeichnet, dass** ein Reflektor (12) im Bereich der Auflage vorgesehen ist.

11. Verfahren zum Messen der Geradheit eines stabförmigen Werkstücks, wobei das Werkstück auf eine Auflage mit mehreren Abschnitten mit jeweils einer Auflagefläche (5, 6, 7) aufgelegt wird und das Werkstück optisch erfasst und/oder mechanisch abgetastet wird, **dadurch gekennzeichnet, dass** die von dem stabförmigen Werkstück auf die Auflagefläche (5, 6, 7) ausgeübte Kraft in einer Richtung im Wesentlichen quer zur Richtung der Erdbeschleunigung mittels eines mit einer Auflagefläche (5, 6, 7) gekoppelten Kraftsensors (8) gemessen wird.

12. Verfahren nach Anspruch 11, **dadurch gekennzeichnet, dass** die Kraft in einer Richtung im Wesentlichen quer zur Richtung der Erdbeschleunigung und ungleich der Längsrichtung des stabförmigen Werkstücks gemessen wird.

13. Verfahren nach Anspruch 11 oder 12, **dadurch gekennzeichnet, dass** zudem die von dem stabförmigen Werkstück auf die Auflagefläche (5, 6, 7) ausgeübte Kraft in einer Richtung im Wesentlichen in Richtung der Erdbeschleunigung gemessen wird.

14. Verfahren nach Anspruch 13, **dadurch gekennzeichnet, dass** mindestens ein Abschnitt (2, 3, 4) der Auflage mit ihrer jeweiligen Auflagefläche (5, 6, 7) frei beweglich quer zur Erdanziehungskraft bewegt wird.

15. Verfahren nach Anspruch 13 oder 14, **dadurch gekennzeichnet, dass** die Auflagefläche (5, 6, 7) druckgeregelt und/oder weggeregelt bewegt wird.

## Claims

1. Device for measuring the straightness of a rod-shaped workpiece with a support for the rod-shaped workpiece and a means for the optical recording and/or mechanical scanning of the rod-shaped workpiece, **characterised in that** the support has several sections (2, 3, 4), each with a support surface (5, 6, 7), wherein at least one force sensor (8, 9) coupled with a support surface (5, 6, 7) is provided for determining a force applied to the support surface (5, 6, 7) by the rod-shaped workpiece in a direction substantially transverse to the direction of the acceleration of gravity.

2. Device according to claim 1, **characterised in that** the at least one force sensor (8, 9) for determining a force applied to the support surface (5, 6, 7) by the rod-shaped workpiece is provided in a direction substantially transverse to the direction of the acceleration of gravity and unequal to the longitudinal direction of the rod-shaped workpiece.

3. Device according to claim 1 or 2, **characterised in that** the at least one force sensor (8, 9) is further designed for determining a force applied to the support surface (5, 6, 7) by the rod-shaped workpiece in a direction substantially in the direction of the acceleration of gravity and/or a further force sensor (8, 9) is provided, with which a force applied to the support surface (5, 6, 7) by the rod-shaped workpiece can be determined in a direction substantially in the direction of the acceleration of gravity.

4. Device according to any one of the claims 1 to 3, **characterised in that** at least one support surface (5, 6, 7) can be moved transverse to the direction of the acceleration of gravity, in particular with a component that is unequal to the longitudinal direction of the rod-shaped workpiece.

5. Device according to any one of the claims 1 to 4, **characterised in that** the support surface (5, 6, 7) is mounted to be inclined and/or displaced.

6. Device according to any one of the claims 1 to 5, **characterised in that** the movement of the support surface (5, 6, 7) transverse to the direction of the acceleration of gravity is recorded.

7. Device according to any one of the claims 1 to 6, **characterised in that** at least one of the sections (2, 3, 4) can be extended substantially in the direction against the acceleration of gravity with a pre-determined pressure.

8. Device according to any one of the claims 1 to 7, **characterised in that** two end-side sections (2, 3, 4) are provided, which allow a fixing of the rod-shaped workpiece.

9. Device according to any one of the claims 1 to 8, **characterised in that** at least one optical means (13) for the optical recording of the rod-shaped workpiece is provided.

10. Device according to any one of the claims 1 to 9, **characterised in that** a reflector (12) is provided in the area of the support.

11. Method for measuring the straightness of a rod-shaped workpiece, wherein the workpiece is laid on a support with several sections, each with a support surface (5, 6, 7), and the workpiece is optically recorded and/or mechanically scanned, **characterised in that** the force applied to the support surface (5, 6, 7) by the rod-shaped workpiece in a direction substantially transverse to the direction of the acceleration of gravity is measured by means of a force sensor (8) coupled with a support surface (5, 6, 7).

12. Method according to claim 11, **characterised in that** the force is measured in a direction substantially transverse to the direction of the acceleration of gravity that is unequal to the longitudinal direction of the rod-shaped workpiece.

13. Method according to claim 11 or 12, **characterised in that** the force applied to the support surface (5, 6, 7) by the rod-shaped workpiece in a direction substantially in the direction of the acceleration of gravity is measured.

14. Method according to claim 13, **characterised in that** at least one section (2, 3, 4) of the support surface, each with its respective support surface (5, 6, 7), is moved freely transverse to the force of gravity.

15. Method according to claim 13 or 14, **characterised in that** the support surface (5, 6, 7) is moved in a pressure regulated and/or path regulated way.

## Revendications

1. Dispositif de mesure de la rectitude d'une pièce en forme de barre avec un support pour la pièce en forme de barre et un moyen de détection optique et / ou de balayage mécanique de la pièce en forme de barre, **caractérisé en ce que** le support présente une pluralité de sections (2, 3, 4) chacune avec une surface d'appui (5, 6, 7), où au moins un capteur de force (8, 9) couplé avec une surface d'appui (5, 6, 7) est prévu pour la détermination d'une force exercée par la pièce en forme de barre sur la surface d'appui (5, 6, 7) dans une direction essentiellement transversale à la direction de l'accélération gravitationnelle.

2. Dispositif selon la revendication 1, **caractérisé en ce que** l'au moins un capteur de force (8, 9) est prévu pour la détermination d'une force exercée par la pièce en forme de barre sur la surface d'appui (5, 6, 7) dans une direction essentiellement transversale à la direction de l'accélération gravitationnelle et inégale à la direction longitudinale de la pièce en forme de barre.

3. Dispositif selon la revendication 1 ou 2, **caractérisé en ce que** l'au moins un capteur de force (8, 9) est en outre conçu pour la détermination d'une force exercée par la pièce en forme de barre sur la surface d'appui (5, 6, 7) dans une direction essentiellement en direction de l'accélération gravitationnelle et / ou qu'il y a un autre capteur de force (8, 9) permettant de déterminer une force exercée par la pièce en forme de barre sur la surface d'appui (5, 6, 7) dans une direction essentiellement en direction de l'accélération gravitationnelle.

4. Dispositif selon l'une des revendications de 1 à 3, **caractérisé en ce qu'**au moins une surface d'appui (5, 6, 7) peut être déplacée transversalement à la direction de l'accélération gravitationnelle, en particulier avec un composant inégalement à la direction longitudinale de la pièce en forme de barre.

5. Dispositif selon l'une des revendications de 1 à 4, **caractérisé en ce que** la surface d'appui (5, 6, 7) est montée de manière inclinable et / ou décalable.

6. Dispositif selon l'une des revendications de 1 à 5, **caractérisé en ce que** le déplacement de la surface d'appui (5, 6, 7) est détecté transversalement à la direction de l'accélération gravitationnelle.

7. Dispositif selon l'une des revendications de 1 à 6, **caractérisé en ce qu'**au moins l'une des sections (2, 3, 4) peut être déployée avec une pression prédéterminée essentiellement en direction contraire à l'accélération gravitationnelle.

8. Dispositif selon l'une des revendications de 1 à 7, **caractérisé en ce que** deux sections d'extrémité (2, 3, 4) sont prévues, permettant une fixation de la pièce en forme de barre.

9. Dispositif selon l'une des revendications de 1 à 8, **caractérisé en ce qu'**au moins un moyen optique (13) est prévu pour la détection optique de la pièce en forme de barre.

10. Dispositif selon l'une des revendications de 1 à 9, **caractérisé en ce qu'**un réflecteur (12) est prévu dans la zone du support.

11. Procédé de mesure de la rectitude d'une pièce en forme de barre, la pièce en forme de barre étant posée sur un support avec une pluralité de sections chacune avec une surface d'appui (5, 6, 7) et la pièce étant détectée optiquement et / ou balayée mécaniquement, **caractérisé en ce que** la force exercée par la pièce en forme de barre sur la surface d'appui (5, 6, 7) dans une direction essentiellement transversale à la direction de l'accélération gravitationnelle est mesurée au moyen d'un capteur de force (8) couplé à une surface d'appui (5, 6, 7).

12. Procédé selon la revendication 11, **caractérisé en ce que** la force est mesurée dans une direction essentiellement transversale à la direction de l'accélération gravitationnelle et inégale à la direction longitudinale de la pièce en forme de barre.

13. Procédé selon la revendication 11 ou 12, **caractérisé en ce qu'**en outre la force exercée par la pièce en forme de barre sur la surface d'appui (5, 6, 7) est mesurée dans une direction essentiellement en direction de l'accélération transversale.

14. Procédé selon la revendication 13, **caractérisé en ce qu'**au moins une section (2, 3, 4) du support avec sa surface d'appui respective (5, 6, 7) est déplacé librement transversalement à la force gravitationnelle.

15. Procédé selon la revendication 13 ou 14, **caractérisé en ce que** la surface d'appui (5, 6, 7) est déplacée en fonction de la pression et / ou de l'orientation.
